# EUROPEAN PATENT APPLICATION

(11) **EP 1 364 916 A1**
(43) Date of publication of application: **26.11.2003**
(21) Application number: 02386001.8
(22) Date of filing: 18.01.2002
(51) Int. Cl.: C02F 11/04, C05F 17/00, C05F 9/00, C02F 3/28

(54) **Method of anaerobic digestion of organic and non organic waste to produce premium compost or recycled fuel**

(30) Priority: 18.01.2001 GR 2001100026
(71) Applicant: Resource Eet (Cyprus) Ltd, 2081, Nicosia (CY)
(72) Inventor: Constantinidis, Constantinos, Limasol (CY); Hood, Peter, Limasol (CY)

(57) **Abstract**

Method of rotary anaerobic digestion of waste of an organic or inorganic origin to produce premium quality compost and recycled fuel. The process is comprised of sections 1, 2, 3, 4 and 5 for the initial process of anaerobic digestion. These sections complete the first cycle of the operation. The operation is completed by sections 6, 7, 8, 9, 10 and 11 and various items of ancillary and auxiliary equipment.

The purpose of this method is to transform waste into fuel at the lowest possible cost of operation and maintenance of the plant.

Two uniquely designed rotating drums, i.e. the Rotary Anaerobic Digester (5) and the Secondary Processing Drum (9) ensure the decomposition of (a) organic material and (b) material of combined organic and inorganic origin to produce either premium quality compost in the first case or recycled fuel (known as "Green Coal") in the second case. Both products are homogenous, completely stable and environmentally friendly. The main purpose of the first drum is the decomposition of the organic matter through the rapid increase in temperature inside the drum under anaerobic conditions. The second drum is used to complete the process of decomposition, while water vapour and moisture are removed through a fan extractor and the product is stabilized. The process is completed in four days. The condensed water produced as a by-product of the process can be used for horticultural and agricultural purposes.

## Description

This invention is concerned with the decomposition of organic waste, e. g. agricultural waste, municipal waste, sewage sludge and abattoir effluent, and waste of inorganic origin. The process takes place in two slow rotating, inclined drums, where the heat resulting from anaerobic digestion, and the extraction of moisture are used to stabilise and pasteurise the end product into either a premium quality compost or recycled combustible fuel ('Green Coal').

The negative environmental impact and high operating costs of landfills and mass incineration has prompted the quest for other solutions that will result in the drastic reduction of these methods which are now considered to be unsuitable waste disposal options. Furthermore, escalating oil prices, the high cost of electricity, the need to preserve natural resources, and to discover alternative energy sources .g. the ability to turn waste into green coal, are the reasons for searching solutions that preserve the natural balance of the environment. In contrast to the traditional aerobic composting methods, the method of rotary anaerobic digestion "RAD" uses advanced technology methods for processing municipal and organic waste.

The advantages arising from this process are varied and important:

It can process organic and non organic waste, 2) Process takes place in closed rotating drums, no emission or odours, 3) Much shorter processing time (2 - 4 days), 4) One technology - integrated waste treatment, 5) Fully automatic process control, 6) Less plant area required in comparison to other processes, 7) Lower investment cost, 8) Lower operating and maintenance costs, 9) Two final products - premium quality compost or fuel ('Green Coal'), 10) No pathogens in the final product, 11) Optional recycling of water into liquid fertiliser, 12) Treats dewatered sewage sludge, 13) Treats abattoir effluent, 14) Flexible and easily expandable to meet increased demand (phased and modular construction), 15) Plants designed to specific requirements (versatility), 16) High recycling rate, 17) Positive environmental impact

### Rotary anaerobic digestion of agricultural waste

### Description of process

After each vehicle is weighed, Agricultural waste (typically banana, papaya, guava, mango, other fruit, vegetable or plant), is tipped in the Reception Area A. The Reception Area is a large concrete area designed to receive agricultural waste. The area is contained within high walls with a further fabricated structure for enclosure and cover. Depending on the size of the waste, initial size reduction may be required, either manually or mechanically. The waste is then loaded by mobile shovel into the Waste Reception Hopper. From the Waste Reception Hopper (1), the waste is conveyed to the Shredder (3) on a slat belt (2). The shredder reduces the size of the waste to less than 50 mm with a reject system, which allows all material that passes through the shredder in excess of 50 mm to be returned for further shredding. From the shredder, the waste is conveyed by a chain conveyor (4) to the Rotary Anaerobic Digester.

The Rotary Anaerobic Digester is typically a drum of cylindrical shape, whose diameter and volume vary according to the needs of the process.

The digester is fed during a 6 hour working shift and discharged at the same time. After filling the digester, it is rotated very slowly for a further 18 - 24 hrs. The rotation of the digester is closely controlled to ensure rapid heat production by the thermophylic decomposition of the organic waste under anaerobic conditions. Breakdown is very rapid and additional heat is generated reaching 60 - 65 °C (thermophilic range) within 2 to 3 hrs on closing the digester. This temperature range is maintained by controlling the speed of rotation. It is not expected to rotate the digester faster than 1 rev/min for loading and discharging, and slower than 1 rev/10 min. A system of lifters incorporating the use of festoon and curtain chains assists in the disintegration and decomposition of the material inside the digester. Methane is not produced since methanogenic producing bacteria are eliminated. At the digestion stage of the process, where the aim is to optimise the anaerobic breakdown of organic material, the digester (5) which is situated on an inclined base, rotated by a generator (6) at a low rotation speed.

The rotation speed of the digester (5) varies (trough a variable generator) from 1-0,1 rev/minute depending on the needs and inclination between 2 to 5 degrees.

The shredding of the waste and resulting attrition within the digester, is essential to optimise the anaerobic breakdown of the waste such that the heat is sufficient to produce excess water vapour. The organic mass from the digester is fed to the Secondary Processing Drum (9) using a screw conveyor (7) and chain conveyor (8). The Secondary Processing Drum (9) has the same capacity as the previous one, and is also positioned on an inclined base and rotated by a variable speed generator. The function of this drum is to remove excess water vapour and moisture from the organic mass, thus homogenising and stabilizing the product.

At the feed end the drum (9), which rotates at slow speed, has a complex system of lifters incorporating the use of festoon and curtain chains which continue the physical breakdown of the waste, and which in turn assist in the removal of water vapour. The water vapour resulting from the inlet feed material to the drum is removed by means of an Extractor Fan (10), situated at the feed end. This fan is automatically controlled according to the relative humidity index to ensure maximum efficiency, e.g. if the relative humidity of the extracted mixture of gas supersaturated

with water vapour falls below 95% the speed of the fan is reduced and if it reaches 100% the speed of the fan is increased. If necessary, air drawn in by the fan may be heated and/or dried. Within 24 - 48 hours, the moisture of the material falls to 45 - 50%. At this point bacterial breakdown ceases and the product is biologically stable and homogenised, environmentally friendly for recycling as a natural premium compost. The water from the saturated air can be condensed to provide a valuable source of water recycled for horticultural and agricultural use. The water contains valuable nitrates resulting from the anaerobic breakdown of the organic material. Depending on the supply of raw waste material, the last 2 metres of the drum, at the exit, will have an in built screening system of 10 mm holes, to screen out any last traces of larger objects. The product (premium compost) from the drum is transferred to a large storage covered area where it is allowed to mature for a further 5 - 7 days using post aeration and turning before bagging.

The compost is rich in natural ammonium and potassium salts and has typically a moisture content of 35 - 50%, with excellent water retention properties and a commercial NPK value related to input waste material. The natural NPK nutrients are present in the form that, unlike chemical additives, release slowly the soluble salts to match the plant growth requirement over a period of up to 3 years. The mature compost may undergo further fine product tuning to the required NPK specification and may be blended with other inert organic material for use as a nutritious soil conditioner, growing media or as a multi purpose compost. The premium compost does not contain organic matter from domestic waste or animal origin.

### Rotary anaerobic digestion of municipal waste

A plant producing Green Coal consists mainly of a Reception Area for the intake of municipal waste, a Front End Separation section for the removal of non combustible material, followed by Resource's Rotary Anaerobic Digester and Secondary

Processing Drum for the digestion and stabilisation processes, respectively.

After each vehicle is weighed municipal waste is tipped in the Reception Area. The Reception Area is a large concrete area designed to receive municipal (mixed) waste. The area is contained within high walls with a further fabricated structure for enclosure and cover. After tipping the waste is spread by mobile shovel, and all large objects are removed manually, predominantly recyclable material such as metals, glass and dense plastic and also inert material. After this manual separation the remaining waste (mainly organic and non organic material - high calorific value combustible material) is loaded by mobile shovel into the Waste Reception Hopper (1).

From the Waste Reception Hopper, the waste passes to the shredder (3) by being conveyed on a slow inclined slat belt. At the end of the belt, before the shredder, an electromagnetic separator removes the remaining metals. The shredder (3) reduces the size of the waste to less than 50 mm with a reject system, which allows all material that passes through the shredder in excess of 50 mm to be returned for further shredding. From the shredder, the waste is conveyed by a chain conveyor to the Rotary Anaerobic Digester.

The Rotary Anaerobic Digester (5) rotates at 0,1 - 1,0 rpm and inclined at 3,5% and sits on a mechanical or hydraulic base. This stage of the process is to maximise the anaerobic fermentation of the concentrated organic material.

The digester is fed during a 6 hr working shift and discharged at the same time. After filling the digester, it is rotated very slowly for a further 18 - 24 hrs. The rotation of the digester is closely controlled to ensure rapid heat production by the thermophylic decomposition of the organic waste under anaerobic conditions. The moisture content of the organic fraction ensures the break down of the non organic - high calorific value material is made easier.

The breakdown is very rapid and additional heat is generated reaching 60 - 65 °C (thermophilic range) within 2 to 3 hrs on closing the digester. This temperature range is maintained by controlling the speed of rotation. It is not expected to rotate the digester faster than 1 rev/min, for loading and discharging, and no slower than 1 rev/10 min. A system of lifters incorporating the use of festoon and curtain chains assists in the disintegration and decomposition of the material inside the digester. Methane is not produced since methanogenic producing bacteria are eliminated. The shredding of the waste and resulting attrition within the digester is essential to optimise the anaerobic breakdown of the waste such that within the digester the heat is sufficient to produce excess water vapour. The combined homogeneous mass of organic and non organic material is then fed to the Secondary Processing Drum (SPD) (9) using a screw conveyor (7) and chain conveyor (8). The digester may also co-process de-watered sewage sludge and abattoir effluent (if available), fed at the feed entry using a screw conveyor and piping system, respectively.

The Secondary Processing Drum has the same capacity as the previous one, also situated on an inclined base so that its operating position can be adjusted, and is rotated by a variable generator. The function of the Secondary Processing Drum is to remove excess water vapour and moisture from the combined organic mass, thus homogenising and stabilising the product.

At the feed end the drum (9) has a complex system of lifters incorporating the use of festoon and curtain chains which continue the physical breakdown of the waste, and which in turn assist in the removal of water vapour. The water vapour resulting from the inlet feed material to the drum is removed by means of an Extractor Fan (10) situated at the feed end. This fan is automatically controlled according to the relative humidity index to ensure maximum efficiency, e. g. if the relative humidity of the exhausted mixture of gas supersaturated with water vapour falls below 95% the speed of the fan is reduced, if it reaches 100% the speed of the fan is increased. If necessary air drawn in by the fan may be heated and or dried. Within 24 - 48 hours, the product moisture falls to 45 - 50%, and bacterial breakdown ceases. Further reduction of the moisture to 10 - 25% is achieved by increasing the time that the material is left in the drum. The final product, 'Green Coal' is a biologically stable, homogeneous, and environmentally friendly fuel. Depending on the supply of raw waste material, the last 2 metres of the drum, at the exit, will have an in built screening system 15 mm, to screen out any last traces of larger objects.

An electromagnetic separator, de-stoner and glass remover installed after the Secondary Processing Drum ensure a clean product free from foreign matter.

Green Coal can be stored without any deterioration in its physical state and calorific value. Green Coal has a minimum net calorific value of 4000 kcal/kg with considerable less Sulphur (0,05 - 0,10%) and Chlorine (0,5%) than conventional coal, a bulk density of 100 - 150 kg/m³ and an ash content of 20% (max). Green Coal can substitute conventional coal, petroleum coke and heavy fuel oil, and can, for example, undergo combustion in cement kilns or in fluidised bed boilers to produce electricity and steam.

As a result, the rotary anaerobic digestion plant has the ability to operate in a self-sufficient way through recycled energy.

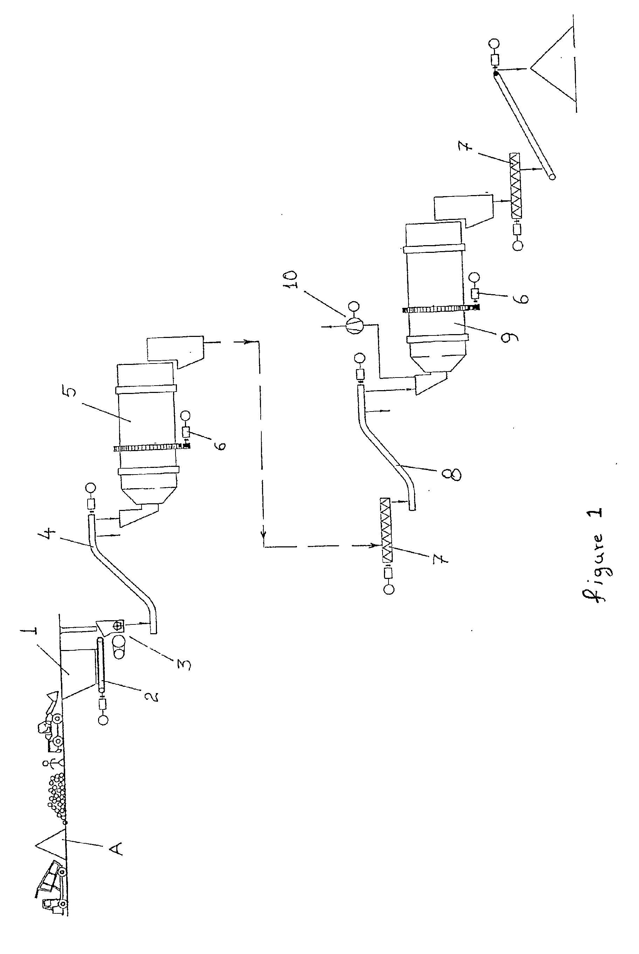

## Claims

1. A method of Rotary Anaerobic Digestion of waste being of organic and inorganic origin to produce premium quality compost and recycled fuel through the use of digesters which accept waste of any description, such as agricultural, industrial, biochemical, biological and municipal waste, where each digester is **characterized by** having as system which hermetically seals the digester so that, among other things, the disintegration of the waste commences and conditions of anaerobic thermophilic decomposition are created. These conditions develop in the digester which is of a cylindrical or other shape. The decomposition creates a thermophilic range for the development of anaerobic fermentation by self-oxidation. Because the preservation of the thermophilic range is necessary as an important component of the decomposition of the waste, the digester, whose capacity varies, is rotated by a motor so that the resulting change in the position of the waste maintains the thermophilic range. The critical point of the process is the development of increasing temperatures which results from the decomposition, with minimal temperature loss to the environment. Internally the digester bears a system of lifters with fins and separators fixed to the internal surface. The purpose of this system is to mix the waste so that the temperature develops to the desired critical point, as the development of the temperature has the result of maximizing the anaerobic decomposition and the breakdown of the waste into increasingly smaller pieces. The digester and mixer are independent but collaborating mechanisms driven by separate motors in a parallel or opposite direction of rotation at the same or at a different speed of rotation depending on the needs. The efficient breakdown of the waste requires an increase in the friction within the mass of the material, which can be achieved by varying the position of the digester in relation to the horizontal. This is achieved by means of a mechanical, electrical or hydraulic system, which adjusts the inclination of the digester in the most suitable position according to the requirements at any given time. For the product to become homogenous and stable it is required that the processed mass becomes free of excessive moisture. Therefore after the first stage of the process is completed the material is conveyed to a second digester where an automatic process takes place according to parameters such as the temperature of the mass and the humidity. These parameters are detected by sensors and the signals that are produced by the sensors result in corrections to various aspects of the process, such as the revolutions of the digester, mixer or extraction fan or the inclination of the digester, so that the removal of moisture is interrupted at the point where the bacterial breakdown has been completed and the material is homogenous and ready for utilization either as compost or as Green Coal. At this point the process has produced recycled fuel, which can be used to produce electric, mechanical or thermal energy which can be used to power the central anaerobic digestion unit independently of any external energy sources such as liquid fuel or electricity from external sources. This allows the unit to be located in remote locations away from residential areas and independently of the availability of external power, as the only external energy required will be the relatively small amount of energy to power the first cycle of operation which will produce the first quantity of green coal which can be used to repeat the process.
